# EUROPEAN PATENT APPLICATION

(11) **EP 3 598 665 A1**
(43) Date of publication of application: **22.01.2020**
(21) Application number: 17905522.3
(22) Date of filing: 14.04.2017
(51) Int. Cl.: H04B 7/26

(54) **COMMUNICATION METHOD AND DEVICE**

(71) Applicant: Huawei Technologies Co., Ltd., Longgang District Shenzhen, Guangdong 518129 (CN)
(72) Inventor: REN, Zhanyang, Shenzhen Guangdong 518129 (CN); HAN, Jinxia, Shenzhen Guangdong 518129 (CN); ZHANG, Wurong, Shenzhen Guangdong 518129 (CN); LI, Zhenyu, Shenzhen Guangdong 518129 (CN)
(74) Representative: Pfenning, Meinig & Partner mbB
(86) International application number: PCT/CN2017/080669
(87) International publication number: WO 2018/188095

(57) **Abstract**

A communication method and an apparatus are provided, where the method includes: determining, by a base station, a pre-configured value; and sending, by the base station, a downlink subframe in a first subframe, where the downlink subframe carries a control format indicator bit and a physical downlink control channel, the control format indicator bit is used to indicate a quantity of symbols occupied by the physical downlink control channel, and the base station determines a value of the control format indicator bit based on the pre-configured value or the quantity of symbols occupied by the physical downlink control channel that needs to be sent in the downlink subframe. In this case, in a WCE scenario, PCFICH coverage enhancement may not be performed any longer, and therefore resource consumption is reduced and impact on PDCCH performance is avoided.

## Description

### TECHNICAL FIELD

This application relates to the field of communications technologies, and in particular, to a communication method and an apparatus.

### BACKGROUND

The MF alliance (MulteFire Alliance, MFA) stipulates, based on a protocol version: long term evolution (Long Term Evolution, LTE) release 14, a working mechanism in which a system is independently deployed (standalone) on an unlicensed (unlicensed) frequency spectrum, and a standard version corresponding to the working mechanism is MF 1.0.

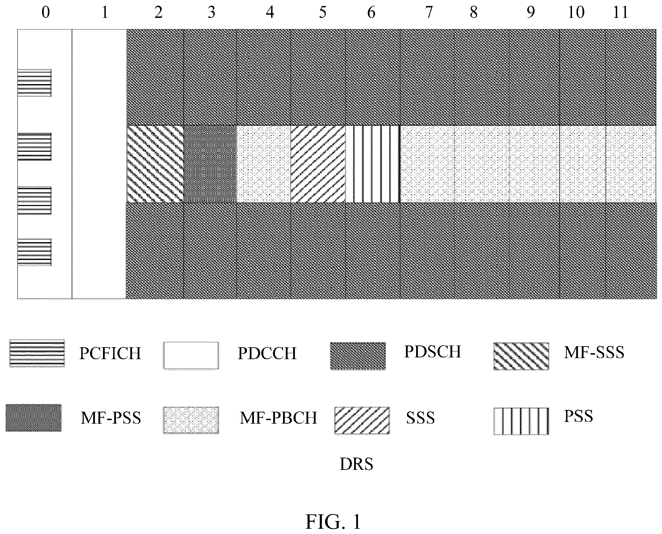

The standard version MF 1.0 is designed based on the LTE standard version, but in MF, MF synchronization signals are added to a discovery signal (Discovery Signal, DRS), that is, an MF enhanced primary synchronization signal (MF enhanced Primary synchronization signals, MF-PSS), an MF enhanced secondary synchronization signal (MF enhanced secondary synchronization signals, MF-SSS), and an MF broadcast signal, and the discovery signal includes an MF enhanced physical broadcast channel (MF enhanced PBCH, MF-PBCH) and an MF system information block (MF system information broadcast, SIB-MF). The SIB-MF is carried on a broadcast physical downlink shared channel (Physical Downlink Shared Channel, PDSCH), where scheduling information of the broadcast PDSCH is carried in common downlink control information (Downlink Control Information, DCI) carried on a physical downlink control channel (Physical Downlink Control Channel, PDCCH), and a quantity of orthogonal frequency division multiplexing (Orthogonal Frequency Division, OFDM) symbols occupied by the PDCCH is carried in a control format indicator (Control Format Indicator, CFI) carried on a physical control format indicator channel (Physical Control Format Indication Channel, PCFICH). Therefore, for a downlink subframe including a DRS, a PCFICH needs to be sent. A specific mapping format of a downlink subframe including a DRS in MF 1.0 is shown in FIG. 1.

For another general downlink subframe that does not include a DRS, a PCFICH channel is also required to be sent. A CFI carried on the PCFICH is used to indicate a quantity of symbols occupied a PDCCH, and DCI carried on the PDCCH indicates scheduling information of a PDSCH or a physical uplink shared channel (Physical Uplink Shared Channel, PUSCH).

In conclusion, a PCFICH needs to be sent for both a general downlink subframe and a DRS subframe. An MF terminal needs to parse a value of a CFI carried on the PCFICH, to determine a quantity of symbols occupied by a PDCCH, so as to determine scheduling information of a PDSCH or a PUSCH by using DCI carried on the PDCCH. Therefore, indication information of the PCFICH plays an important role in correct demodulation by the MF terminal.

A standalone MF system operates in many scenarios in which deep coverage is required, such as a factory, a port, and a warehouse. Therefore, during evolution of a protocol version MF 1.1, the MFA has approved wideband coverage extension (Wideband Coverage Extension, WCE) as a work item (Work Item, WI) project. In a frequency spectrum regulation, a transmit power is limited on an unlicensed frequency spectrum, compared with an uplink channel, coverage on a downlink channel in WCE is limited, and therefore currently, coverage enhancement of a downlink channel is mainly focused.

In a WCE scenario, a PCFICH needs to be demodulated for a WCE user, and therefore the PCFICH also needs to be enhanced. Because the PCFICH and a PDCCH share a time-frequency resource in a control domain, if PCFICH enhancement is performed within same subframes, PDCCH performance is affected. Therefore, a solution is urgently required to avoid a design of PCFICH coverage enhancement.

### SUMMARY

Embodiments of this application provide a communication method and an apparatus, to avoid a design of PCFICH coverage enhancement in a WCE scenario.

According to a first aspect, a communication method is provided, and includes:
determining, by a base station, a pre-configured value; and
sending, by the base station, a downlink subframe in a first subframe, where the downlink subframe carries a control format indicator bit and a physical downlink control channel, and the control format indicator bit is used to indicate a quantity of symbols occupied by the physical downlink control channel; where
the base station determines a value of the control format indicator bit based on the pre-configured value or the quantity of symbols occupied by the physical downlink control channel that needs to be sent in the downlink subframe.

In this design, because the value of the control format indicator bit may be determined based on different application scenarios, to ensure that a terminal can successfully demodulate a PCFICH in any application scenario, especially in a WCE scenario, to implement service transmission. In the WCE scenario, the value of the control format indicator bit is the pre-configured value, and PCFICH coverage enhancement may not be performed any longer, and therefore resource consumption is reduced, impact on PDCCH performance is avoided, and access by a user terminal that does not require coverage enhancement can be allowed.

With reference to the first aspect, in a possible design, the determining, by the base station, a value of the control format indicator bit based on the pre-configured value or the quantity of symbols occupied by the physical downlink control channel that needs to be sent in the downlink subframe includes:
if an accessing terminal user includes a first-type user, determining, by the base station, the pre-configured value as the value of the control format indicator bit; or
if an accessing terminal user does not include a first-type user, determining, by the base station, the quantity of symbols occupied by the PDCCH that needs to be sent, as the value of the control format indicator bit, where
the first-type user is a user that cannot successfully demodulate a physical control format indicator channel PCFICH, and the control format indicator bit is carried by the PCFICH.

In this design, the base station can determine the value of the control format indicator bit based on a user type of a terminal accessing a system, to ensure that the terminal can successfully demodulate a PCFICH thereby ensuring service transmission of the terminal.

With reference to the first aspect, in a possible design, the determining, by a base station, a pre-configured value includes:
determining, by the base station, the pre-configured value based on a stipulation in a standard or a protocol.

With reference to the first aspect, in a possible design, the determining, by a base station, a pre-configured value includes:
if the downlink subframe includes a head subframe of a discovery signal, determining that the pre-configured value is 2;
if the downlink subframe includes a subframe other than a head subframe of the discovery signal, determining that the pre-configured value is 0, 1, 2, or 3; or
if the downlink subframe does not include a discovery signal, determining that the pre-configured value is 2 or 3.

In this design, the base station can flexibly determine the pre-configured value based on different designs of the downlink subframe, and successfully demodulate a PCFICH on a premise that PCFICH coverage enhancement is not performed any longer, so as to avoid impact on PDCCH performance.

With reference to the first aspect, in a possible design, the method further includes:
when the value of the CFI is 2, non-simultaneously scheduling, by the base station, any two of downlink control information DCI in a system message, DCI in a paging message, and DCI in a frame format indicator; or
when the value of the CFI is 3, simultaneously scheduling, by the base station, any two of DCI in a system message, DCI in a paging message, and DCI in a frame format indicator.

According to a second aspect, a communication method is provided, and includes:
determining, by a base station, a value of a first control format indicator bit; and
sending, by the base station, a discovery signal in a first subframe, where the discovery signal carries the first control format indicator bit, and a value of the first control format indicator bit is used to indicate a quantity of symbols occupied by a physical downlink control channel included in the discovery signal; where
the base station determines the value of the first control format indicator bit based on a pre-configured value or the quantity of symbols occupied by the physical downlink control channel that needs to be sent in the discovery signal, and
a broadcast channel of the discovery signal further carries a second control format indicator bit.

In this design, in a WCE scenario, a value of a CFI in a downlink subframe that does not include the discovery signal may be configured through the broadcast channel, so as to avoid a design of PCFICH coverage enhancement, reduce resource consumption, and avoid impact on PDCCH performance. The value of the CFI may be updated and modified by using broadcast information, so as to improve system flexibility.

With reference to the second aspect, in a possible design, a value of the second control format indicator bit is used to indicate a quantity of symbols occupied by a physical downlink control channel that needs to be sent in a downlink subframe that does not include the discovery signal.

With reference to the second aspect, in a possible design, the broadcast channel is a system information block SIB or a master information block.

According to a third aspect, a communication method is provided, and includes:
receiving, by a terminal, a downlink subframe; and
determining, by the terminal based on a pre-configured value, a quantity of symbols occupied by a downlink control channel in the downlink subframe, where
the pre-configured value may be defined based on a standard or received through a broadcast channel.

In this design, when the terminal cannot successfully demodulate a PCFICH to obtain the quantity of symbols occupied by the PDCCH, the terminal can obtain the quantity of symbols based on the pre-configured value, to implement service data transmission, and further avoid a design of PCFICH coverage enhancement in a WCE scenario, reduce resource consumption, and avoid impact on PDCCH performance.

With reference to the third aspect, in a possible design, the broadcast channel is a system information block SIB or a master information block.

According to a fourth aspect, a base station is provided, and includes:
a processing unit, configured to determine a pre-configured value; and
a sending unit, configured to send a downlink subframe in a first subframe, where the downlink subframe carries a control format indicator bit and a physical downlink control channel, and the control format indicator bit is used to indicate a quantity of symbols occupied by the physical downlink control channel; where
the processing unit determines a value of the control format indicator bit based on the pre-configured value or the quantity of symbols occupied by the physical downlink control channel that needs to be sent in the downlink subframe.

With reference to the fourth aspect, in a possible design, when determining the value of the control format indicator bit based on the pre-configured value or the quantity of symbols occupied by the physical downlink control channel that needs to be sent in the downlink subframe, the processing unit is specifically configured to:
if an accessing terminal user includes a first-type user, determine the pre-configured value as the value of the control format indicator bit; or
if an accessing terminal user does not include a first-type user, determine the quantity of symbols occupied by the PDCCH that needs to be sent, as the value of the control format indicator bit, where
the first-type user is a user that cannot successfully demodulate a physical control format indicator channel PCFICH, and the control format indicator bit is carried by the PCFICH.

With reference to the fourth aspect, in a possible design, when determining the pre-configured value, the processing unit is specifically configured to
determine the pre-configured value based on a stipulation in a standard or a protocol.

With reference to the fourth aspect, in a possible design, when determining the pre-configured value, the processing unit is specifically configured to:
if the downlink subframe includes a head subframe of a discovery signal, determine that the pre-configured value is 2;
if the downlink subframe includes a subframe other than a head subframe of the discovery signal, determine that the pre-configured value is 0, 1, 2, or 3; or
if the downlink subframe does not include a discovery signal, determine that the pre-configured value is 2 or 3.

With reference to the fourth aspect, in a possible design, the processing unit is further configured to:
when the value of the CFI is 2, non-simultaneously schedule any two of downlink control information DCI in a system message, DCI in a paging message, and DCI in a frame format indicator; or
when the value of the CFI is 3, simultaneously schedule any two of DCI in a system message, DCI in a paging message, and DCI in a frame format indicator.

According to a fifth aspect, a base station is provided, and includes:
a processing unit, configured to determine a value of a first control format indicator bit; and
a sending unit, configured to send a discovery signal in a first subframe, where the discovery signal carries the first control format indicator bit, and a value of the first control format indicator bit is used to indicate a quantity of symbols occupied by a physical downlink control channel included in the discovery signal; where
the processing unit determines the value of the first control format indicator bit based on a pre-configured value or the quantity of symbols occupied by the physical downlink control channel that needs to be sent in the discovery signal, and
a broadcast channel of the discovery signal further carries a second control format indicator bit.

With reference to the fifth aspect, in a possible design, a value of the second control format indicator bit is used to indicate a quantity of symbols occupied by a physical downlink control channel that needs to be sent in a downlink subframe that does not include the discovery signal.

With reference to the fifth aspect, in a possible design, the broadcast channel is a system information block SIB or a master information block.

According to a sixth aspect, a terminal is provided, and includes:
a receiving unit, configured to receive a downlink subframe; and
a processing unit, configured to determine, based on a pre-configured value, a quantity of symbols occupied by a downlink control channel in the downlink subframe, where
the pre-configured value may be defined based on a standard or received through a broadcast channel.

With reference to the sixth aspect, in a possible design, the broadcast channel is a system information block SIB or a master information block.

According to a seventh aspect, a base station is provided, where the base station includes a processor, a memory, and a transmitter, the memory stores a computer readable program, and the processor controls the transmitter by running the program in the memory, to implement the communication method in the first aspect.

For a principle for resolving a problem by the base station and beneficial effects of the base station, refer to the foregoing first aspect, the possible implementations of the communication method of the first aspect, and the beneficial effects brought by the first aspect and the possible implementations of the first aspect. Therefore, for implementation of the base station, refer to the foregoing first aspect and the possible implementations of the communication method of the first aspect, and repeated content is not described again.

According to an eighth aspect, a base station is provided, where the base station includes a processor, a memory, and a transmitter, the memory stores a computer readable program, and the processor controls the transmitter by running the program in the memory, to implement the communication method in the second aspect.

For a principle for resolving a problem by the base station and beneficial effects of the base station, refer to the foregoing second aspect, the possible implementations of the communication method of the second aspect, and the beneficial effects brought by the second aspect and the possible implementations of the second aspect. Therefore, for implementation of the base station, refer to the foregoing second aspect and the possible implementations of the communication method of the second aspect, and repeated content is not described again.

According to a ninth aspect, a terminal is provided, where the base station includes a processor, a memory, and a receiver, the memory stores a computer readable program, and the processor controls the receiver by running the program in the memory, to implement the communication method in the third aspect.

For a principle for resolving a problem by the terminal and beneficial effects of the terminal, refer to the foregoing third aspect, the possible implementations of the communication method of the third aspect, and the beneficial effects brought by the third aspect and the possible implementations of the third aspect. Therefore, for implementation of the terminal, refer to the foregoing third aspect and the possible implementations of the communication method of the third aspect, and repeated content is not described again.

According to a tenth aspect, a computer storage medium is provided, where the storage medium is a computer readable storage medium; the computer readable storage medium stores a program, and the program includes an instruction; and when the instruction is executed by a network device provided with a processor, the network device is enabled to perform the communication method in the foregoing first aspect and the possible implementations of the first aspect.

According to an eleventh aspect, a computer storage medium is provided, where the storage medium is a computer readable storage medium; the computer readable storage medium stores a program, and the program includes an instruction; and when the instruction is executed by a network device provided with a processor, the network device is enabled to perform the communication method in the foregoing second aspect and the possible implementations of the second aspect.

According to a twelfth aspect, a computer storage medium is provided, where the storage medium is a computer readable storage medium; the computer readable storage medium stores a program, and the program includes an instruction; and when the instruction is executed by a terminal device provided with a processor, the electronic device is enabled to perform the communication method in the foregoing third aspect and the possible implementations of the third aspect.

### DESCRIPTION OF DRAWINGS

FIG. 1 is a schematic diagram of a sending format of a DRS in MF 1.0;
FIG. 2 is a schematic diagram of a sending format of an eDRS;
FIG. 3A is a flowchart of a communication method according to an embodiment of this application;
FIG. 3B is a schematic design diagram of a downlink subframe according to an embodiment of this application;
FIG. 4 is a flowchart of a communication method according to an embodiment of this application;
FIG. 5 is a flowchart of a communication method according to an embodiment of this application;
FIG. 6 is a schematic structural diagram of a communications apparatus according to an embodiment of this application;
FIG. 7 is a schematic structural diagram of a base station according to an embodiment of this application;
FIG. 8 is a schematic structural diagram of a communications apparatus according to an embodiment of this application;
FIG. 9 is a schematic structural diagram of a base station according to an embodiment of this application;
FIG. 10 is a schematic structural diagram of a communications apparatus according to an embodiment of this application;
FIG. 11 is a schematic structural diagram of a terminal according to an embodiment of this application;
FIG. 12 is a schematic structural diagram of a terminal according to an embodiment of this application; and
FIG. 13 is a schematic structural diagram of a base station according to an embodiment of this application.

### DESCRIPTION OF EMBODIMENTS

The following clearly and completely describes the technical solutions in the embodiments of this application with reference to accompanying drawings in the embodiments of this application.

FIG. 1 is a schematic diagram of a sending format of a DRS in MF 1.0. The MFA stipulates that the following: A DRS in MF 1.0 occupies a total of 12 OFDM symbols; an MF-PSS/MF-SSS is added to the DRS in MF 1.0 in addition to a PSS/SSS defined in LTE; and the PSS/SSS and the MF-PSS/MF-SSS each occupy one symbol, an MF-PBCH occupies six symbols, and there are two remaining symbols. Therefore, a value of a CFI in a downlink subframe including the DRS in MF 1.0 can only be 1 or 2. Because an unlicensed frequency spectrum is a shared frequency spectrum, if the value of the CFI is 1, a gap between a PDCCH and a synchronization signal may be used by another system. As a result, interference is introduced to a subsequent synchronization signal and broadcast channel. Therefore, for the downlink subframe including the DRS in MF 1.0, a scheduling unit usually needs to set the value of the CFI to 2.

The DRS carries a downlink synchronization signal and a downlink channel, and therefore the DRS needs to be enhanced in MF 1.1. An enhanced DRS may be referred to as an enhanced discovery signal (Enhanced Discovery Signal, eDRS) or a DRS signal. The eDRS may be transmitted in a plurality of consecutive or nonconsecutive subframes. For example, an existing DRS may be compatible in all the plurality of consecutive subframes, or an existing DRS may be compatible only in a head subframe and information different from the existing DRS is sent in other subsequent consecutive subframes. The information different from the existing DRS may be determined based on a requirement of a specific scenario. "Compatible" herein means that a DRS may be sent in the head subframe of the eDRS according to an existing format of sending a DRS in a subframe. Herein, a manner for enhancing a discovery signal is not limited. The following provides description by using a specific enhancement solution as an example.

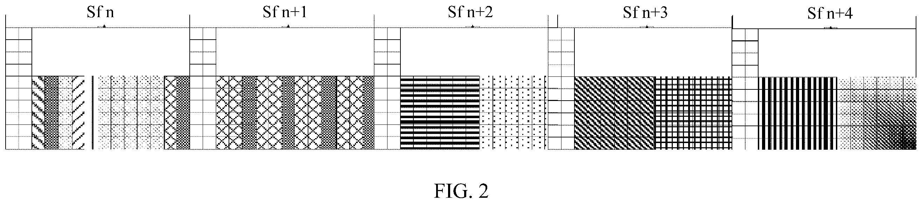

For a DRS in MF 1.0, an enhancement solution shown in FIG. 2, that is, an eDRS, is proposed. Based on a DRS in MF 1.0 (refer to a subframe sf n in FIG. 2), the eDRS continues to be continuously sent in four subframes (refer to a subframe sf n+1, a subframe sf n+2, a subframe sf n+3, and a subframe sf n+4 that are shown in FIG. 2).

A specific format of the eDRS is as follows:
(1) A time domain length is 5 ms, that is, five subframes.
(2) The first 12 symbols occupied by a subframe n are occupied by an existing DRS in MF 1.0.
(3) The last two symbols occupied by a subframe n and a subframe n+1 are occupied by synchronization sequences.
(4) Subframes n+2, n+3, and n+4 are occupied by six MF enhanced physical broadcast channels (MF Enhanced Physical Broadcast Channel, MF-ePBCH), and each MF-ePBCH occupies six symbols.
(5) An SIB-MF is repeatedly sent in subframes n+1, n+2, n+3, and n+4.

It can be learned from the foregoing that, an existing eDRS may be compatible with the DRS in MF 1.0, but no PCFICH enhancement solution is provided.

The present invention proposes a communication solution that may be compatible with a user corresponding to MF 1.0 in a WCE scenario, so as to avoid a design of PCFICH coverage enhancement for a WCE user.

It should be noted that, a discovery signal in this application may be a DRS in MF 1.0 or an enhanced eDRS.

A communication method in the embodiments of this application is mainly for a process in which a terminal communicates with a base station in a wireless access network. The terminal may be referred to as a user terminal, and may include various handheld devices, in-vehicle devices, wearable devices, and computing devices that have a wireless communication function, another processing device connected to a wireless modem, and various forms of user equipment (User Equipment, UE), mobile stations (Mobile station, MS), terminal equipment (Terminal Equipment), relay devices, or the like. The base station may include various apparatuses providing a communication function for a terminal in a wireless access network. For example, the base station may include various forms of macro stations, micro base stations, relay stations, access points, and the like. In a system using different wireless access technologies, the base station may have different names. For example, in a long term evolution (Long Term Evolution, LTE) network, the base station is referred to as an evolved NodeB (evolved NodeB, eNB or eNodeB for short), and in a third-generation 3G network, the base station is referred to as NodeB (Node B).

A technology described in the embodiments of this application may be applicable to an LTE system or another wireless communications system using various wireless access technologies, for example, a system using an access technology such as code division multiple access, frequency division multiple access, time division multiple access, orthogonal frequency division multiple access, or single carrier frequency division multiple access. In addition, the technology may alternatively be applicable to a subsequent evolved system of an LTE system, such as a fifth-generation 5G system.

Embodiments of this application provide a communication method and an apparatus, to avoid a design of PCFICH coverage enhancement in a WCE scenario. The method and the apparatus are based on a same inventive concept. Because principles for resolving problems by the method and the apparatus are similar, cross reference may be performed on implementation of the apparatus and the method, and repeated content is not described again.

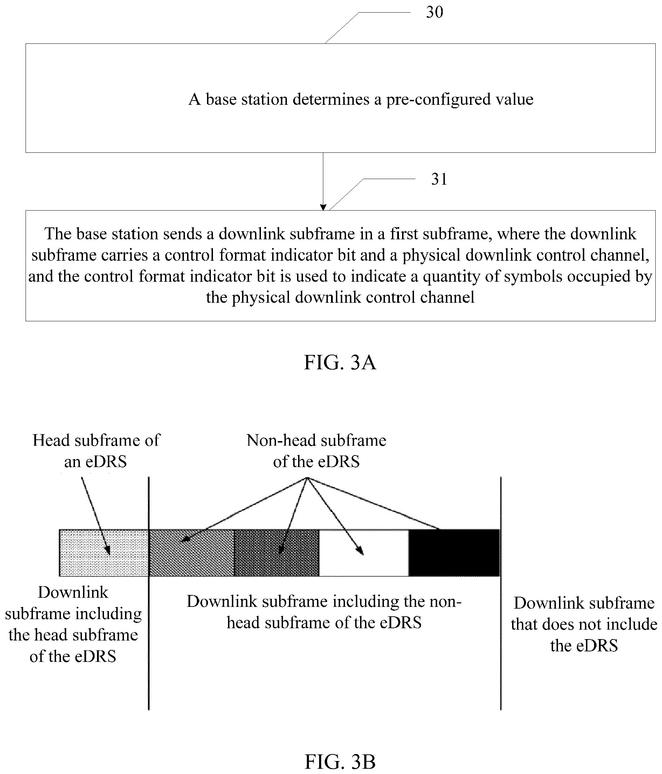

FIG. 3 is a schematic flowchart of a communication method according to an embodiment of this application. The process may be specifically implemented by hardware, software programming, or a combination of software and hardware.

A base station may be configured to perform the process shown in FIG. 3, a function module, in the base station, configured to perform the communication solution provided in this embodiment of the present invention may be specifically implemented by hardware, software programming, or a combination of software and hardware, and the hardware may include one or more signal processing circuits and/or application-specific integrated circuits.

As shown in FIG. 3A, the process specifically includes the following processing procedures:
Step 30: The base station determines a pre-configured value.

Specifically, when determining the pre-configured value, the base station determines the pre-configured value based on a stipulation in a standard or a protocol.

Step 31: The base station sends a downlink subframe in a first subframe, where the downlink subframe carries a control format indicator bit and a physical downlink control channel, and the control format indicator bit is used to indicate a quantity of symbols occupied by the physical downlink control channel.

The base station determines a value of the control format indicator bit based on the pre-configured value or the quantity of symbols occupied by the physical downlink control channel that needs to be sent in the downlink subframe.

It should be noted that, a quantity of symbols occupied by a PDCCH actually sent by the base station in a communication process is the same as the value of the CFI.

Specifically, for the determining, by the base station, a value of the control format indicator bit based on the pre-configured value or the quantity of symbols occupied by the physical downlink control channel that needs to be sent in the downlink subframe, there may be the following two cases:
In a first case, if an accessing terminal user includes a first-type user, the base station determines the pre-configured value as the value of the control format indicator bit.

The first-type user is a user that cannot successfully demodulate a PCFICH, that is, the foregoing WCE user in this application, and the control format indicator bit is carried by the PCFICH.

In a second case, if an accessing terminal user does not include a first-type user, the base station determines the quantity of symbols occupied by the PDCCH that needs to be sent, as the value of the control format indicator bit.

Specifically, for the determining, by the base station, a pre-configured value, there are the following three cases based on a specific design of the downlink subframe, and a schematic design diagram of the downlink subframe is shown in FIG. 3B.

In a first case, if the downlink subframe includes a head subframe of a discovery signal, the pre-configured value is 2.

When the discovery signal is an eDRS of which at least head subframe is compatible with an existing DRS, because the head subframe of the eDRS needs to be compatible with a DRS in MF 1.0, a format of the first 12 symbols occupied by the head subframe of the eDRS is the same as a format of the DRS in MF 1.0. Both a PCFICH and a PDCCH are located in a control symbol area, and the PCFICH fixedly occupies four resource element groups (Resource Element Group, REG) in frequency domain, and all the four REGs are uniformly distributed in a system bandwidth, and the PCFICH fixedly occupies the first symbol in time domain. CFI information carried by the PCFICH is 2 bits. When a WCE user is to access the base station, enhancement needs to be performed on all downlink channels, including a PCFICH and a PDCCH. To allow access by a user corresponding to MF 1.0, PCFICH enhancement is performed. This affects PDCCH coverage performance, and therefore a PCFICH enhancement solution is limited. Therefore, for the WCE user, if the downlink subframe is a downlink subframe including the head subframe of the eDRS, a pre-configured value of the CFI is 2. In this case, PCFICH coverage enhancement is not performed any longer, and therefore resource consumption is reduced and impact on PDCCH performance is avoided, and can access by a user corresponding to MF 1.0.

In a second case, if the downlink subframe does not include a discovery signal, the pre-configured value is 2 or 3.

Because the CFI indicates the quantity of symbols occupied by the PDCCH, and the PDCCH carries DCI information, the CFI determines a capacity of the DCI.

For a WCE user, enhancement needs to be performed for common DCI and DCI specific to the WCE user. The common DCI needs to be compatible with a user corresponding to MF 1.0, and therefore the common DCI needs to be carried on the PDCCH.

The common DCI usually includes DCI in a system message, DCI in a paging message, and DCI in a frame format indicator, and may be correspondingly in a DCI 1A format or a DCI 1C format.

An enhancement target in MF 1.1 is -10.5 dB, and according to current simulation results of the MFA, required enhancement values of DCI in different formats are shown in Table 1:

**Table 1**

| | PDCCH DCI 1A | PDCCH DCI 1C |
|---|---|---|
| SINR corresponding to an MF 1.0 operating point | -4.8 | -7.9 |
| Quantity of dBs that needs to be enhanced for a WCE user corresponding to MF 1.1 | 5.7 | 2.6 |

It can be learned from Table 1 that:
DCI 1A: An enhancement target is 5.7 dB, a maximum aggregation level supported by a user corresponding to MF 1.0 is eight control channel elements (Control Channel Element, CCE), and a WCE user needs to increase the aggregation level to 32 CCEs.
DCI 1A: An enhancement target is 2.6 dB, a maximum aggregation level supported by the user corresponding to MF 1.0 is eight CCEs, and the WCE user needs increase the aggregation level to 16 CCEs.

In a system bandwidth of 10 MHz, there are two antenna ports, and if only a cell-specific reference signal (Cell specific reference signal, CRS) and a PDCCH are considered, total quantities of CCEs in a control area in case of different CFIs are shown in Table 2:

**Table 2**

| System bandwidth (MHz) | CFI value | | |
|---|---|---|---|
| | 1 | 2 | 3 |
| 10 | 10 CCEs | 27 CCEs | 44 CCEs |

As shown in Table 2, if PDCCH enhancement is supported by increasing an aggregation level, only the following two configurations are supported for the bandwidth of 10 MHz:
The bandwidth is 10 MHz, CFI=3, and the PDCCH carries one piece of DCI 1A or two pieces of DCI 1C.
The bandwidth is 10 MHz, CFI=2, and the PDCCH carries one piece of DCI 1C.

Therefore, for the WCE user, if the downlink sub frame does not include an eDRS, a pre-configured value of the CFI is 2 or 3. In this case, PCFICH coverage enhancement is not performed any longer, and therefore resource consumption is reduced and impact on PDCCH performance is avoided, and a user corresponding to MF 1.0 is compatible.

In a third case, if the downlink subframe includes a subframe other than a head subframe of the discovery signal, the pre-configured value is 0, 1, 2, or 3.

When the discovery signal is an eDRS, and the downlink subframe includes the subframe other than the head subframe of the discovery signal, there are the following several cases:
Case 1: The downlink subframe includes a non-head subframe of the eDRS, and a PDCCH and/or a PCFICH are/is not sent in the downlink subframe, and in this case, a pre-configured value of the CFI is 0.
Case 2: The downlink sub frame includes a non-head sub frame of the eDRS, and a PDCCH in the downlink subframe occupies one symbol, and in this case, a pre-configured value of the CFI is 1.
Case 3: The downlink subframe includes a non-head subframe of the eDRS, and a quantity of symbols occupied by a PDCCH in the downlink subframe is the same as a quantity of symbols occupied by a PDCCH in the head subframe of the eDRS, and in this case, a pre-configured value of the CFI is 2.
Case 4: The downlink subframe includes a non-head subframe of the eDRS, and a quantity of symbols occupied by a PDCCH in the downlink subframe is the same as a quantity of symbols occupied by a PDCCH in a downlink subframe that does not include the eDRS, and in this case, a pre-configured value of the CFI is 2 or 3.

When a system bandwidth is 10 MHz, the value of the CFI is 2, and PDCCH enhancement is supported by increasing an aggregation level in a control area, the base station cannot simultaneously schedule any two of DCI in a system message, DCI in a paging message, and DCI in a frame format indicator. When the value of the CFI is 3, the base station may simultaneously schedule any two of DCI in a system message, DCI in a paging message, and DCI in a frame format indicator.

In conclusion, according to the communication solution of FIG. 3A, because different pre-configured values of the CFI are used in different scenarios, PCFICH coverage enhancement may not be performed any longer in a WCE scenario, and therefore resource consumption is reduced and impact on PDCCH performance is avoided.

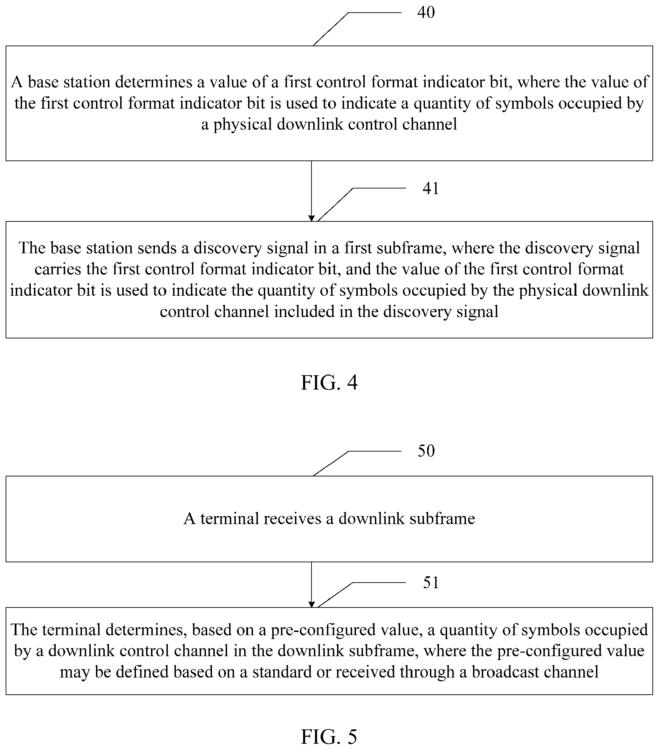

FIG. 4 is a schematic flowchart of a communication method according to an embodiment of this application. The process may be specifically implemented by hardware, software programming, or a combination of software and hardware.

A base station may be configured to perform the process shown in FIG. 4, a function module, in the base station, configured to perform the communication solution provided in this embodiment of the present invention may be specifically implemented by hardware, software programming, or a combination of software and hardware, and the hardware may include one or more signal processing circuits and/or application-specific integrated circuits.

As shown in FIG. 4, the process specifically includes the following processing procedures:
Step 40: The base station determines a value of a first control format indicator bit, where the value of the first control format indicator bit is used to indicate a quantity of symbols occupied by a physical downlink control channel.

It should be noted that, a control format indicator bit may alternatively be used to indicate a start location of an enhanced physical downlink control channel (Enhanced Physical Downlink Control Channel, EPDCCH). Because a manner in which the control format indicator bit indicates a quantity of time-domain OFDM symbols occupied by a PDCCH is similar to a manner in which the control format indicator bit indicates a start location of OFDM symbols occupied by an EPDCCH in a subframe. The following provides description by only using an example in which the control format indicator bit indicates the quantity of time-domain OFDM symbols occupied by the PDCCH. For example, if a value of a CIF carried on a PCFICH is 2 (or a CFI is pre-configured to be 2 or configured to be 2 through a broadcast channel), it may indicate that two OFDM symbols are occupied in a time domain of a PDCCH, or that a start location of a time domain of an EPDCCH is the second (counted starting from 0) OFDM symbol.

Step 41: The base station sends a discovery signal in a first subframe, where the discovery signal carries the first control format indicator bit, and the value of the first control format indicator bit is used to indicate a quantity of symbols occupied by a physical downlink control channel included in the discovery signal.

The base station determines the value of the first control format indicator bit based on a pre-configured value or the quantity of symbols occupied by the physical downlink control channel that needs to be sent in the discovery signal, and a broadcast channel of the discovery signal further carries a second control format indicator bit.

The first subframe is a downlink subframe including the discovery signal, and a value of the second control format indicator bit is used to indicate a quantity of symbols occupied by a physical downlink control channel that needs to be sent in a downlink subframe that does not include the discovery signal.

The discovery signal carries a PDCCH; the discovery signal includes a CFI resource used to indicate a quantity of symbols occupied by the PDCCH; and a value of a CFI in the discovery signal may be obtained in a pre-configuration manner or may be determined based on a quantity of symbols occupied by a PDCCH that needs to be sent in the discovery signal. In addition, the value of the second CFI carried on the broadcast channel of the discovery signal is used by a terminal to demodulate a PDCCH in a downlink subframe that does not include the discovery signal.

When the discovery signal is an eDRS, because the eDRS includes an MF-PBCH broadcast message and an SIB-MF broadcast message , and in a current eDRS enhancement solution, enhancement is synchronously performed on an MF-PBCH and an SIB-MF, a WCE user has correctly read the MF-PBCH message and the SIB-MF message in an access process. Therefore, for a downlink subframe that does not include an eDRS, for a WCE user corresponding to MF 1.1, a value of a CFI may be configured by using the MF-PBCH broadcast message or the SIB-MF broadcast message. For a user corresponding to MF 1.0 or a non-WCE user corresponding to MF 1.1, a value of a CFI may be obtained by demodulating a PCFICH or may be configured through an MF-PBCH or an SIB-MF.

In conclusion, according to the communication solution of FIG. 4, in a WCE scenario, a value of a CFI in a downlink subframe that does not include the discovery signal may be configured through the broadcast channel, so as to avoid a design of PCFICH coverage enhancement, reduce resource consumption, and avoid impact on PDCCH performance. The value of the CFI may be updated and modified by using broadcast information, so as to improve system flexibility.

Based on the communication methods on a base station side that are shown in FIG. 3A and FIG. 4, FIG. 5 is a schematic flowchart of a communication method on a terminal side according to an embodiment of this application. The process may be specifically implemented by hardware, software programming, or a combination of software and hardware.

A terminal may be configured to perform the process shown in FIG. 5, a function module, in the terminal, configured to perform the communication solution provided in this embodiment of the present invention may be specifically implemented by hardware, software programming, or a combination of software and hardware, and the hardware may include one or more signal processing circuits and/or application-specific integrated circuits.

As shown in FIG. 5, the process specifically includes the following processing procedures:
Step 50. The terminal receives a downlink subframe.

The downlink subframe includes a general downlink subframe and a DRS subframe.

Step 51. The terminal determines, based on a pre-configured value, a quantity of symbols occupied by a downlink control channel in the downlink subframe, where the pre-configured value may be defined based on a standard or received through a broadcast channel.

The broadcast channel is a master information block or a system information block.

In the way, when a user type of the terminal is a WCE user operating in a WCE scenario, the terminal can determine, based on the pre-configured value, the quantity of symbols occupies by the PDCCH, to implement service data transmission, so as to avoid a design of PCFICH coverage enhancement in the WCE scenario, reduce resource consumption, and avoid impact on PDCCH performance.

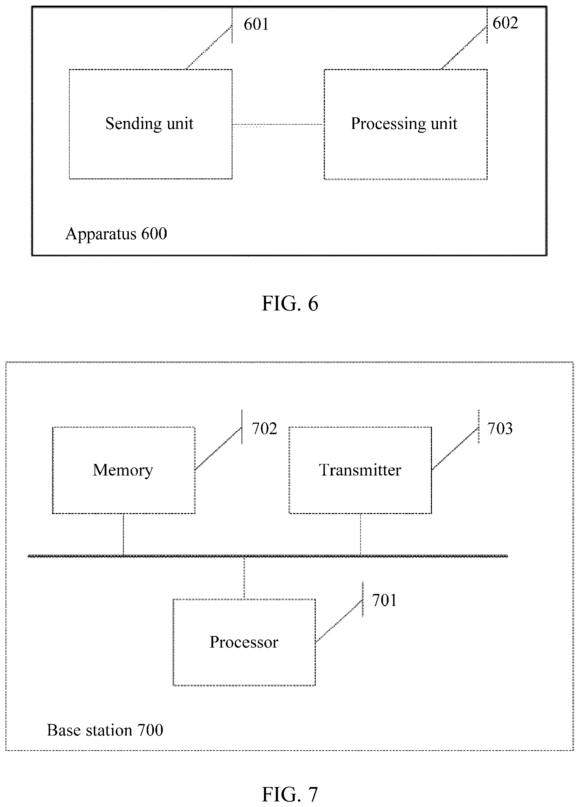

Based on the communication method provided in FIG. 3A, refer to FIG. 6. An embodiment of this application provides a communications apparatus 600, where the apparatus 600 is applied to a base station or another network device. FIG. 6 is a schematic structural diagram of the apparatus 600 according to this embodiment of this application. As shown in FIG. 6, the apparatus 600 includes a sending unit 601 and a processing unit 602.

The processing unit 602 is configured to determine a pre-configured value.

The sending unit 601 is configured to send a downlink subframe in a first subframe, where the downlink subframe carries a control format indicator bit and a physical downlink control channel, and the control format indicator bit is used to indicate a quantity of symbols occupied by the physical downlink control channel.

The processing unit 602 determines a value of the control format indicator bit based on the pre-configured value or the quantity of symbols occupied by the physical downlink control channel that needs to be sent in the downlink subframe.

Optionally, when determining the value of the control format indicator bit based on the pre-configured value or the quantity of symbols occupied by the physical downlink control channel that needs to be sent in the downlink subframe, the processing unit 602 is specifically configured to:
if an accessing terminal user includes a first-type user, determine the pre-configured value as the value of the control format indicator bit; or
if an accessing terminal user does not include a first-type user, determine the quantity of symbols occupied by the PDCCH that needs to be sent, as the value of the control format indicator bit.

The first-type user is a user that cannot successfully demodulate a physical control format indicator channel PCFICH, and the control format indicator bit is carried by the PCFICH.

Optionally, when determining the pre-configured value, the processing unit 602 is specifically configured to
determine the pre-configured value based on a stipulation in a standard or a protocol.

Optionally, when determining the pre-configured value, the processing unit 602 is specifically configured to:
if the downlink subframe includes a head subframe of a discovery signal, determine that the pre-configured value is 2;
if the downlink subframe includes a subframe other than a head subframe of the discovery signal, determine that the pre-configured value is 0, 1, 2, or 3; or
if the downlink subframe does not include a discovery signal, determine that the pre-configured value is 2 or 3.

Optionally, the processing unit 602 is further configured to:
when the value of the CFI is 2, non-simultaneously schedule any two of downlink control information DCI in a system message, DCI in a paging message, and DCI in a frame format indicator; or
when the value of the CFI is 3, simultaneously schedule any two of DCI in a system message, DCI in a paging message, and DCI in a frame format indicator.

It should be understood that, division of the units in the foregoing apparatus 600 is merely logical function division, and in actual implementation, all or some of the units may be integrated into a physical entity, or the units may be separated physically. For example, the foregoing units may be processing elements separately configured, or implemented by being integrated into a chip of a base station. In addition, the foregoing units may be stored in a storage element of the base station in a form of program code, and are invoked by a processing element of the base station to perform functions of the foregoing units. In addition, the units may be integrated together or independently implemented. The processing element herein may be an integrated circuit chip and has a signal processing capability. In an implementation process, steps in the foregoing methods or the foregoing units can be implemented by using a hardware integrated logical circuit in a processing element, or by using instructions in a form of software. The processing element may be a general purpose processor such as a central processing unit (Central Processing Unit, CPU); may be one or more integrated circuits configured to implement the foregoing method, for example, one or more application-specific integrated circuits (Application Specific Integrated Circuit, ASIC); or may be one or more microprocessors (digital signal processor, DSP), one or more field programmable gate arrays (Field Programmable Gate Array, FPGA) or the like.

It should be noted that, for function implementation and an interactive mode of the units of the apparatus 600 in this embodiment of this application, further refer to description of a related method embodiment, and details are not repeated herein.

An embodiment of this application further provides a base station 700. FIG. 7 is a schematic structural diagram of the base station 700 according to this embodiment of this application. As shown in FIG. 7, the base station 700 includes a processor 701, a memory 702, and a transmitter 703, program code used for executing the solution of the present invention is stored in the memory 702, and execution of the program code is controlled by the processor 701.

A program stored in the memory 702 is used to instruct the processor 701 to perform a communication method, where the communication method includes: determining a pre-configured value; and sending a downlink subframe in a first subframe by using the transmitter 703, where the downlink subframe carries a control format indicator bit and a physical downlink control channel, and the control format indicator bit is used to indicate a quantity of symbols occupied by the physical downlink control channel.

The processor 701 determines a value of the control format indicator bit based on the pre-configured value or the quantity of symbols occupied by the physical downlink control channel that needs to be sent in the downlink subframe.

Optionally, when determining the value of the control format indicator bit based on the pre-configured value or the quantity of symbols occupied by the physical downlink control channel that needs to be sent in the downlink subframe, the processor 701 is specifically configured to:
if an accessing terminal user includes a first-type user, determine the pre-configured value as the value of the control format indicator bit; or
if an accessing terminal user does not include a first-type user, determine the quantity of symbols occupied by the PDCCH that needs to be sent, as the value of the control format indicator bit.

The first-type user is a user that cannot successfully demodulate a physical control format indicator channel PCFICH, and the control format indicator bit is carried by the PCFICH.

Optionally, when determining the pre-configured value, the processor 701 is specifically configured to
determine the pre-configured value based on a stipulation in a standard or a protocol.

Optionally, when determining the pre-configured value, the processor 701 is specifically configured to:
if the downlink subframe includes a head subframe of a discovery signal, determine that the pre-configured value is 2;
if the downlink subframe includes a subframe other than a head subframe of the discovery signal, determine that the pre-configured value is 0, 1, 2, or 3; or
if the downlink subframe does not include a discovery signal, determine that the pre-configured value is 2 or 3.

Optionally, the processor 701 is further configured to:
when the value of the CFI is 2, non-simultaneously schedule any two of downlink control information DCI in a system message, DCI in a paging message, and DCI in a frame format indicator; or
when the value of the CFI is 3, simultaneously schedule any two of DCI in a system message, DCI in a paging message, and DCI in a frame format indicator.

It can be understood that, the base station 700 in this embodiment can be configured to implement all functions of the base station in the foregoing method embodiment; and for its specific implementation process, refer to related description of performing the method by the base station in the foregoing method embodiment, and details are not repeated herein.

It can be understood that, the processor 701 in the foregoing base station 700 in this embodiment of this application may be a general central processing unit (CPU), a microprocessor, an application-specific integrated circuit (ASIC), or one or more integrated circuits configured to control program execution in the solution of the present invention. One or more memories included in a computer system may be a read-only memory (ROM) or another type of static storage device that can store static information and an instruction, a random access memory (RAM) or another type of dynamic storage device that can store information and an instruction, or a magnetic disk memory. These memories are connected to the processor by using a bus.

The transmitter 703 may implement its function by using a transceiver, and the transceiver may be an entity module that can implement receiving and sending functions, so as to communicate with another device or a communications network.

The memory 702 such as a RAM stores an operating system and a program used for executing the solution of the present invention. The operating system is configured to control running of another program and manage a system resource program.

These memories 702 and the transmitter 703 may be connected to the processor 701 by using a bus, or these memories 702 and the transmitter 703 each may be connected to the processor 701 by using a dedicated connecting line.

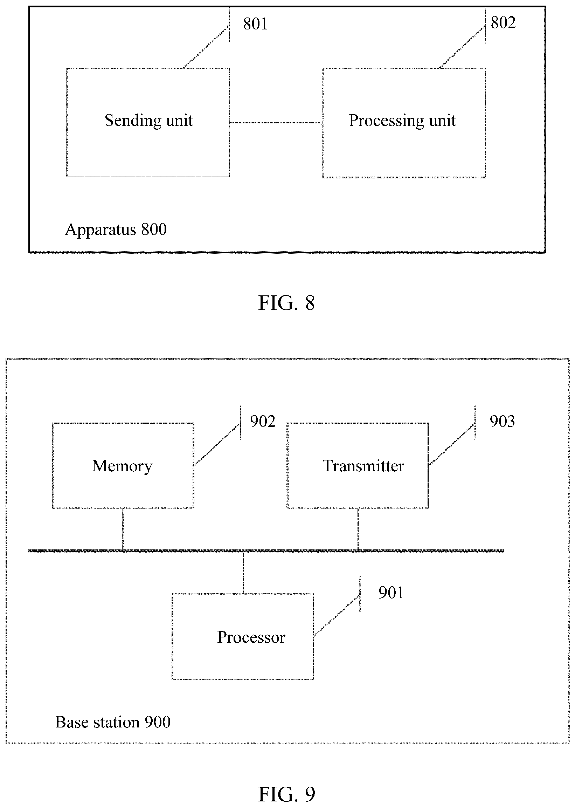

Based on the communication method provided in FIG. 4, refer to FIG. 8. An embodiment of this application provides a communications apparatus 800, where the apparatus 800 is applied to a base station or another network device. FIG. 8 is a schematic structural diagram of the apparatus 800 according to this embodiment of this application. As shown in FIG. 8, the apparatus 800 includes a sending unit 801 and a processing unit 802.

The processing unit 802 is configured to determine a value of a first control format indicator bit.

The sending unit 801 is configured to send a discovery signal in a first subframe, where the discovery signal carries the first control format indicator bit, and a value of the first control format indicator bit is used to indicate a quantity of symbols occupied by a physical downlink control channel included in the discovery signal.

The processing unit 802 determines the value of the first control format indicator bit based on a pre-configured value or the quantity of symbols occupied by the physical downlink control channel that needs to be sent in the discovery signal.

A broadcast channel of the discovery signal further carries a second control format indicator bit.

Optionally, a value of the second control format indicator bit is used to indicate a quantity of symbols occupied by a physical downlink control channel that needs to be sent in a downlink subframe that does not include the discovery signal.

Optionally, the broadcast channel is a system information block SIB or a master information block.

It should be understood that, division of the units in the foregoing apparatus 800 is merely logical function division, and in actual implementation, all or some of the units may be integrated into a physical entity, or the units may be separated physically. For example, the foregoing units may be processing elements separately configured, or implemented by being integrated into a chip of a base station. In addition, the foregoing units may be stored in a storage element of the base station in a form of program code, and are invoked by a processing element of the base station to perform functions of the foregoing units. In addition, the units may be integrated together or independently implemented. The processing element herein may be an integrated circuit chip and has a signal processing capability. In an implementation process, steps in the foregoing methods or the foregoing units can be implemented by using a hardware integrated logical circuit in a processing element, or by using instructions in a form of software. The processing element may be a general purpose processor such as a central processing unit (Central Processing Unit, CPU); may be one or more integrated circuits configured to implement the foregoing method, for example, one or more application-specific integrated circuits (Application Specific Integrated Circuit, ASIC); or may be one or more microprocessors (digital signal processor, DSP), one or more field programmable gate arrays (Field Programmable Gate Array, FPGA) or the like

It should be noted that, for function implementation and an interactive mode of the units of the apparatus 800 in this embodiment of this application, further refer to description of a related method embodiment, and details are not repeated herein.

An embodiment of this application further provides a base station 900. FIG. 9 is a schematic structural diagram of the base station 900 according to this embodiment of this application. As shown in FIG. 9, the base station 900 includes a processor 901, a memory 902, and a transmitter 903, program code executing the solution of the present invention is stored in the memory 902, and execution of the program code is controlled by the processor 901.

A program stored in the memory 902 is used to instruct the processor 901 to perform a communication method, where the communication method includes: determining a value of a first control format indicator bit, and sending a discovery signal in a first subframe by using the transmitter 903, where the discovery signal carries the first control format indicator bit, and a value of the first control format indicator bit is used to indicate a quantity of symbols occupied by a physical downlink control channel included in the discovery signal.

The processor 901 determines the value of the first control format indicator bit based on a pre-configured value or the quantity of symbols occupied by the physical downlink control channel that needs to be sent in the discovery signal, and a broadcast channel of the discovery signal further carries a second control format indicator bit.

Optionally, a value of the second control format indicator bit is used to indicate a quantity of symbols occupied by a physical downlink control channel that needs to be sent in a downlink subframe that does not include the discovery signal.

Optionally, the broadcast channel is a system information block SIB or a master information block.

It can be understood that, the base station 900 in this embodiment can be configured to implement all functions of the base station in the foregoing method embodiment; and for its specific implementation process, refer to related description of performing the method by the base station in the foregoing method embodiment, and details are not repeated herein.

It can be understood that, the processor 901 in the foregoing base station 900 in this embodiment of this application may be a general central processing unit (CPU), a microprocessor, an application-specific integrated circuit application-specific integrated circuit (ASIC), or one or more integrated circuits configured to control program execution in the solution of the present invention. One or more memories included in a computer system may be a read-only memory read-only memory (ROM) or another type of static storage device that can store static information and an instruction, a random access memory random access memory (RAM) or another type of dynamic storage device that can store information and an instruction, or a magnetic disk memory. These memories are connected to the processor by using a bus.

The transmitter 903 may implement its function by using a transceiver, and the transceiver may be an entity module that can implement receiving and sending functions, so as to communicate with another device or a communications network.

The memory 902 such as a RAM stores an operating system and a program used for executing the solution of the present invention. The operating system is configured to control running of another program and manage a system resource program.

These memories 902 and the transmitter 903 may be connected to the processor 901 by using a bus, or these memories 902 and the transmitter 903 each may be connected to the processor 901 by using a dedicated connecting line.

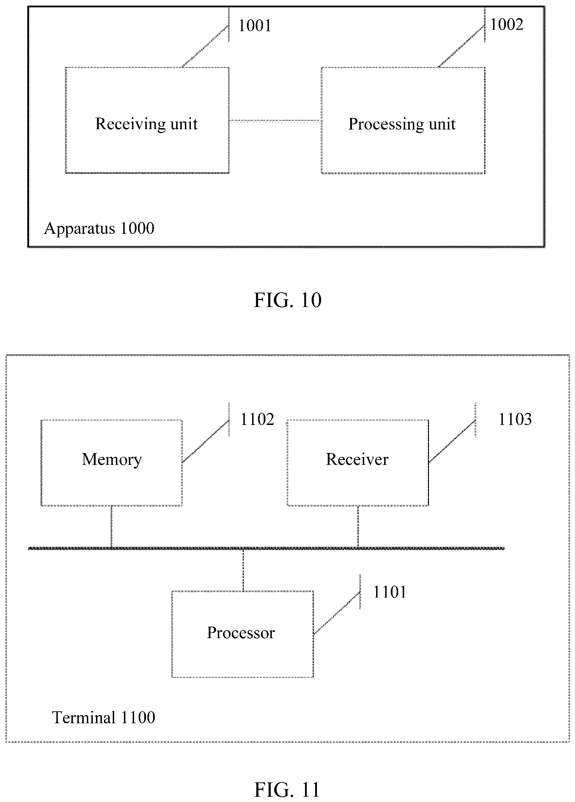

Based on the communication method provided in FIG. 5, refer to FIG. 10. An embodiment of this application provides a communications apparatus 1000, where the apparatus 1000 is applied to a terminal. FIG. 10 is a schematic structural diagram of the apparatus 1000 according to this embodiment of this application. As shown in FIG. 10, the apparatus 1000 includes a receiving unit 1001 and a processing unit 1002.

The receiving unit 1001 is configured to receive a downlink subframe.

The processing unit 1002 is configured to determine, based on a pre-configured value, a quantity of symbols occupied by a downlink control channel in the downlink subframe.

The pre-configured value may be defined based on a standard or received through a broadcast channel.

Optionally, the broadcast channel is a system information block SIB or a master information block.

It should be understood that, division of the units in the foregoing apparatus 1000 is merely logical function division, and in actual implementation, all or some of the units may be integrated into a physical entity, or the units may be separated physically. For example, the foregoing units may be processing elements separately configured, or implemented by being integrated into a chip of the terminal. In addition, the foregoing units may be stored in a storage element of the terminal in a form of program code, and are invoked by a processing element of the terminal to perform functions of the foregoing units. In addition, the units may be integrated together or independently implemented. The processing element herein may be an integrated circuit chip and has a signal processing capability. In an implementation process, steps in the foregoing methods or the foregoing units can be implemented by using a hardware integrated logical circuit in a processing element, or by using instructions in a form of software. The processing element may be a general purpose processor such as a central processing unit (Central Processing Unit, CPU); may be one or more integrated circuits configured to implement the foregoing method, for example, one or more application-specific integrated circuits (Application Specific Integrated Circuit, ASIC); or may be one or more microprocessors (digital signal processor, DSP), one or more field programmable gate arrays (Field Programmable Gate Array, FPGA) or the like.

It should be noted that, for function implementation and an interactive mode of the units of the apparatus 1000 in this embodiment of this application, further refer to description of a related method embodiment, and details are not repeated herein.

An embodiment of this application further provides a terminal 1100. FIG. 11 is a schematic structural diagram of the terminal 1100 according to this embodiment of this application. As shown in FIG. 11, the terminal 1100 includes a processor 1101, a memory 1102, and a receiver 1103, program code used for executing the solution of the present invention is stored in the memory 1102, and execution of the program code is controlled by the processor 1101.

A program stored in the memory 1102 is used to instruct the processor 1101 to perform a communication method, where the communication method includes: receiving a downlink sub frame by using the receiver 1103, and determining, based on a pre-configured value, a quantity of symbols occupied by a downlink control channel in the downlink subframe, where the pre-configured value may be defined based on a standard or received through a broadcast channel.

Optionally, the broadcast channel is a system information block SIB or a master information block.

It can be understood that, the terminal 1100 in this embodiment can be configured to implement all functions of the terminal in the foregoing method embodiment; and for its specific implementation process, refer to related description of performing the method by the terminal in the foregoing method embodiment, and details are not repeated herein.

It can be understood that, the processor 1101 in the foregoing terminal 1100 in this embodiment of this application may be a general central processing unit (CPU), a microprocessor, an application-specific integrated circuit application-specific integrated circuit (ASIC), or one or more integrated circuits configured to control program execution in the solution of the present invention. One or more memories included in a computer system may be a read-only memory read-only memory (ROM) or another type of static storage device that can store static information and an instruction, a random access memory random access memory (RAM) or another type of dynamic storage device that can store information and an instruction, or a magnetic disk memory. These memories are connected to the processor by using a bus.

The receiver 1103 may implement its function by using a transceiver, and the transceiver may be an entity module that can implement receiving and sending functions, so as to communicate with another device or a communications network.

The memory 1102 such as a RAM stores an operating system and a program used for executing the solution of the present invention. The operating system is configured to control running of another program and manage a system resource program.

These memories 1102 and the transmitter 1103 may be connected to the processor 1101 by using a bus, or these memories 1102 and the transmitter 1103 each may be connected to the processor 1101 by using a dedicated connecting line.

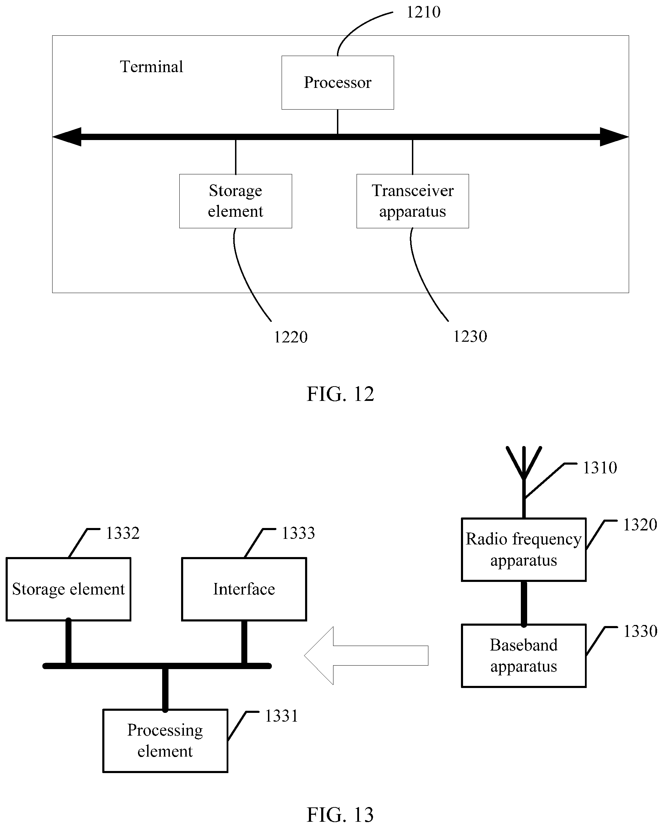

FIG. 12 is a schematic structural diagram of a terminal according to an embodiment of this application. As shown in FIG. 12, the terminal includes a processor 1210, a storage element 1220, and a transceiver apparatus 1230. The transceiver apparatus 1230 may be connected to an antenna. In a downlink direction, the transceiver apparatus 1230 receives, by using the antenna, information sent by a base station, and sends the information to the processor 1210 for processing. In an uplink direction, the processor 1210 processes data of the terminal, and sends processed data to the base station by using the transceiver apparatus 1230.

The storage element 1220 is configured to store program code used to implement the method embodiment shown in FIG. 5 or the units in the embodiment shown in FIG. 10, and the processor 1210 invokes the program code to perform an operation of the foregoing method embodiment, to implement functions of the units shown in FIG. 10.

For example, the storage element 1220 is configured to store program code used to instruct the processor 1210 to perform a communication method.

The processor 1210 is configured to invoke the program code stored in the storage element 1220, to perform the following operations: receiving a downlink subframe, and determining, based on a pre-configured value, a quantity of symbols occupied by a downlink control channel in the downlink subframe, where the pre-configured value may be defined based on a standard or received through a broadcast channel.

Some or all of the foregoing units may alternatively be implemented by being embedded into a chip of the terminal in a form of a field programmable gate array (Field Programmable Gate Array, FPGA). In addition, the units may be separately implemented or integrated together.

The processing element herein is the same as that described in the foregoing, may be a general purpose processor such as a central processing unit (Central Processing Unit, CPU); may be one or more integrated circuits configured to implement the foregoing method, for example, one or more application-specific integrated circuits (Application Specific Integrated Circuit, ASIC); or may be one or more microprocessors (digital signal processor, DSP), one or more field programmable gate arrays (Field Programmable Gate Array, FPGA) or the like. The storage element may be a storage apparatus or a general term of a plurality of storage elements.

In addition, the processor may be provided with a plurality of interfaces, and the interfaces each are configured to connect to a peripheral device or an interface circuit connected to a peripheral device. For example, the interface is an interface configured to connect to a display, an interface configured to connect to a camera, an interface configured to connect to an audio processing element, or the like.

FIG. 13 is a schematic structural diagram of a base station according to an embodiment of this application. As shown in FIG. 13, the base station includes an antenna 1310, a radio frequency apparatus 1320, and a baseband apparatus 1330. The antenna 1310 is connected to the radio frequency apparatus 1320. In an uplink direction, the radio frequency apparatus 1320 receives, by using the antenna 1310, information sent by a terminal, and sends, to the baseband apparatus 1330, the information sent by the terminal, for processing. In a downlink direction, the baseband apparatus 1330 processes information from the terminal, and sends processed information to the radio frequency apparatus 1320; and the radio frequency apparatus 1320 processes the information from the terminal, and sends processed information to the terminal by using the antenna 1310.

The foregoing apparatus 500 may be located in the baseband apparatus 1330, and includes a processing element 1331 and a storage element 1332. The baseband apparatus 1330 may include, for example, at least one baseband board, where the baseband board is provided with a plurality of chips. As shown in FIG. 13, a chip such as the processing unit 1331 is connected to the storage element 1332, so as to invoke a program in the storage element 1332 to perform an operation described in the foregoing method embodiment. The baseband apparatus 1330 may further include an interface 1333 configured to exchange information with the radio frequency apparatus 1320, where the interface is, for example, a common public radio interface (common public radio interface, CPRI).

For another example, the processing unit 602 in FIG. 6 may be implemented by using a chip of the baseband apparatus 1330, and the sending unit 601 may be implemented by using another chip of the baseband apparatus 1330; or the processing unit 602 and the sending unit 601 are integrated together, and are implemented by using a chip of the baseband apparatus 1330, or functions of the processing unit 602 and the sending unit 601 are stored in the storage element of the baseband apparatus 1330 in a form of program code, and are implemented by scheduling by a processing element of the baseband apparatus 1330. Implementation of another unit is similar to that in the foregoing.

The processing element herein is the same as that described in the foregoing, may be a general purpose processor such as a central processing unit (Central Processing Unit, CPU); may be one or more integrated circuits configured to implement the foregoing method, for example, one or more application-specific integrated circuits (Application Specific Integrated Circuit, ASIC); or may be one or more microprocessors (digital signal processor, DSP), one or more field programmable gate arrays (Field Programmable Gate Array, FPGA) or the like.

The storage element may be a memory or a general term of a plurality of storage elements.

Based on a same technical concept, for a principle for resolving a problem by a communications apparatus or device provided in some embodiments of this application and beneficial effects of the communications apparatus or a device, reference may be performed on the implementations of the foregoing method and beneficial effects brought by the foregoing method. For implementation of the apparatus or the device, refer to the implementation of the foregoing method embodiment, and repeated content is not described again.

All or some of the foregoing embodiments may be implemented through software, hardware, or any combination thereof. When software is used to implement the embodiments, the embodiments may be implemented completely or partially in a form of a computer program product.

The computer program product includes one or more computer instructions. When the computer program instructions are loaded and executed on a computer, the procedure or functions according to the embodiments of this application are all or partially generated. The computer may be a general-purpose computer, a special-purpose computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, a twisted pair, or an optical fiber) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Obviously, a person skilled in the art can make various modifications and variations to the embodiments of this application without departing from the spirit and scope of this application. Therefore, this application is intended to cover these modifications and variations made to the embodiments of this application, provided that they fall within the scope defined by the claims in this application and their equivalent technologies.

## Claims

1. A communication method, comprising:
determining, by a base station, a pre-configured value; and
sending, by the base station, a downlink subframe in a first subframe, wherein the downlink subframe carries a control format indicator bit and a physical downlink control channel, and the control format indicator bit is used to indicate a quantity of symbols occupied by the physical downlink control channel; wherein
the base station determines a value of the control format indicator bit based on the pre-configured value or the quantity of symbols occupied by the physical downlink control channel that needs to be sent in the downlink subframe.

2. The method according to claim 1, the determining, by the base station, a value of the control format indicator bit based on the pre-configured value or the quantity of symbols occupied by the physical downlink control channel that needs to be sent in the downlink subframe comprises:
if an accessing terminal user comprises a first-type user, determining, by the base station, the pre-configured value as the value of the control format indicator bit; or
if an accessing terminal user does not comprise a first-type user, determining, by the base station, the quantity of symbols occupied by the PDCCH that needs to be sent, as the value of the control format indicator bit, wherein
the first-type user is a user that cannot successfully demodulate a physical control format indicator channel PCFICH, and the control format indicator bit is carried by the PCFICH.

3. The method according to claim 2, wherein the determining, by a base station, a pre-configured value comprises:
determining, by the base station, the pre-configured value based on a stipulation in a standard or a protocol.

4. The method according to any one of claims 1 to 3, wherein the determining, by a base station, a pre-configured value comprises:
if the downlink subframe comprises a head subframe of a discovery signal, determining that the pre-configured value is 2;
if the downlink subframe comprises a subframe other than a head subframe of the discovery signal, determining that the pre-configured value is 0, 1, 2, or 3; or
if the downlink subframe does not comprise a discovery signal, determining that the pre-configured value is 2 or 3.

5. The method according to any one of claims 1 to 4, wherein the method further comprises:
when the value of the CFI is 2, non-simultaneously scheduling, by the base station, any two of downlink control information DCI in a system message, DCI in a paging message, and DCI in a frame format indicator; or
when the value of the CFI is 3, simultaneously scheduling, by the base station, any two of DCI in a system message, DCI in a paging message, and DCI in a frame format indicator.

6. A communication method, comprising:
determining, by a base station, a value of a first control format indicator bit; and
sending, by the base station, a discovery signal in a first subframe, wherein the discovery signal carries the first control format indicator bit, and a value of the first control format indicator bit is used to indicate a quantity of symbols occupied by a physical downlink control channel comprised in the discovery signal; wherein
the base station determines the value of the first control format indicator bit based on a pre-configured value or the quantity of symbols occupied by the physical downlink control channel that needs to be sent in the discovery signal, and
a broadcast channel of the discovery signal further carries a second control format indicator bit.

7. The method according to claim 6, wherein a value of the second control format indicator bit is used to indicate a quantity of symbols occupied by a physical downlink control channel that needs to be sent in a downlink subframe that does not comprise the discovery signal.

8. The method according to claim 6 or 7, wherein the broadcast channel is a system information block SIB or a master information block.

9. A communication method, comprising:
receiving, by a terminal, a downlink subframe; and
determining, by the terminal based on a pre-configured value, a quantity of symbols occupied by a downlink control channel in the downlink subframe, wherein
the pre-configured value may be defined based on a standard or received through a broadcast channel.

10. The method according to claim 9, wherein the broadcast channel is a system information block SIB or a master information block.

11. A base station, comprising:
a processing unit, configured to determine a pre-configured value; and
a sending unit, configured to send a downlink subframe in a first subframe, wherein the downlink subframe carries a control format indicator bit and a physical downlink control channel, and the control format indicator bit is used to indicate a quantity of symbols occupied by the physical downlink control channel; wherein
the processing unit determines a value of the control format indicator bit based on the pre-configured value or the quantity of symbols occupied by the physical downlink control channel that needs to be sent in the downlink subframe.

12. The base station according to claim 11, when determining the value of the control format indicator bit based on the pre-configured value or the quantity of symbols occupied by the physical downlink control channel that needs to be sent in the downlink subframe, the processing unit is specifically configured to:
if an accessing terminal user comprises a first-type user, determine the pre-configured value as the value of the control format indicator bit; or
if an accessing terminal user does not comprise a first-type user, determine the quantity of symbols occupied by the PDCCH that needs to be sent, as the value of the control format indicator bit, wherein
the first-type user is a user that cannot successfully demodulate a physical control format indicator channel PCFICH, and the control format indicator bit is carried by the PCFICH.

13. The base station according to claim 12, wherein when determining the pre-configured value, the processing unit is specifically configured to
determine the pre-configured value based on a stipulation in a standard or a protocol.

14. The base station according to any one of claims 11 to 13, wherein when determining the pre-configured value, the processing unit is specifically configured to:
if the downlink subframe comprises a head subframe of a discovery signal, determine that the pre-configured value is 2;
if the downlink subframe comprises a subframe other than a head subframe of the discovery signal, determine that the pre-configured value is 0, 1, 2, or 3; or
if the downlink subframe does not comprise a discovery signal, determine that the pre-configured value is 2 or 3.

15. The base station according to any one of claims 11 to 14, wherein the processing unit is further configured to:
when the value of the CFI is 2, non-simultaneously schedule any two of downlink control information DCI in a system message, DCI in a paging message, and DCI in a frame format indicator; or
when the value of the CFI is 3, simultaneously schedule any two of DCI in a system message, DCI in a paging message, and DCI in a frame format indicator.

16. Abase station, comprising:
a processing unit, configured to determine a value of a first control format indicator bit; and
a sending unit, configured to send a discovery signal in a first subframe, wherein the discovery signal carries the first control format indicator bit, and a value of the first control format indicator bit is used to indicate a quantity of symbols occupied by a physical downlink control channel comprised in the discovery signal; wherein
the processing unit determines the value of the first control format indicator bit based on a pre-configured value or the quantity of symbols occupied by the physical downlink control channel that needs to be sent in the discovery signal, and
a broadcast channel of the discovery signal further carries a second control format indicator bit.

17. The base station according to claim 16, wherein a value of the second control format indicator bit is used to indicate a quantity of symbols occupied by a physical downlink control channel that needs to be sent in a downlink subframe that does not comprise the discovery signal.

18. The base station according to claim 16 or 17, wherein the broadcast channel is a system information block SIB or a master information block.

19. A terminal, comprising:
a receiving unit, configured to receive a downlink subframe; and
a processing unit, configured to determine, based on a pre-configured value, a quantity of symbols occupied by a downlink control channel in the downlink subframe, wherein
the pre-configured value may be defined based on a standard or received through a broadcast channel.

20. The terminal according to claim 19, wherein the broadcast channel is a system information block SIB or a master information block.
